Europäisches Patentamt

(19) European Patent Office    (11) Numéro de publication: **0 214 210**

Office européen des brevets    **B1**

(12)    # FASCICULE DE BREVET EUROPÉEN

(45) Date de publication du fascicule du brevet:    (51) Int. Cl. ⁴: **C 05 F    9/04**
17.01.90

(21) Numéro de dépôt: **86901419.1**

(22) Date de dépôt: **26.02.86**

(86) Numéro de dépôt international:
**PCT/FR 86/00062**

(87) Numéro de publication international:
**WO 86/04891 (28.08.86 Gazette 86/19)**

(54) PROCEDE POUR ACCELERER LA FERMENTATION DE LA BIOMASSE, A BASE DE MATIERES CELLULOSIQUES.

---

(30) Priorité: **26.02.85 FR 8502764**

(43) Date de publication de la demande:
**18.03.87 Bulletin 87/12**

(45) Mention de la délivrance du brevet:
**17.01.90 Bulletin 90/03**

(84) Etats contractants désignés:
**FR GB IT NL**

(56) Documents cité:
**FR-A-1 460 727**
**FR-A-2 546 161**
**US-A-4 032 318**

**Le dossier contient des informations techniques présentées postérieurement au dépôt de la demande et ne figurant pas dans le présent fascicule.**

(73) Titulaire: **OSTRE, Louis**
**90, avenue Raymond Poincarré**
**F-75116 Paris (FR)**

(72) Inventeur: **OSTRE, Louis**
**90, avenue Raymond Poincarré**
**F-75116 Paris (FR)**

(74) Mandataire: **Gillard, Marie-Louise**
**Cabinet Beau de Loménie 55, Rue d'Amsterdam**
**F-75008 Paris (FR)**

EP 0 214 210 B1

---

LIBERGRAF, STOCKHOLM 1990

## Description

La présente invention a pour objet un procédé d'obtention de composts utiles pour la culture des champignons, par fermentation aérobie d'une biomasse à base de matières cellulosiques.

Il est bien connu de l'homme de l'art que le cycle de culture du champignon comprend notamment les étapes de fabrication du compost et celle d'ensemencement dudit compost. Le procédé selon l'invention intervient avantageusement au cours de la première étape de ce procédé.

Le procédé selon l'invention permet une dégradation plus rapide de la cellulose et engendre donc une libération plus rapide de glucides, ce qui conduit à l'obtention de compost dans un temps relativement court.

Selon l'invention, on ne recherche toutefois pas, une dégradation poussée de la biomasse comme c'est par exemple le cas dans les procédés décrits dans les brevets FR-A-1 460 727 et US-A-4 032 318.

A cette fin, on préconise l'intervention, selon le brevet FR-A-1 460 727, de sources abondantes d'enzymes et selon le brevet US-A-4 032 318, d'un "cocktail de choc" incluant des enzymes, des microorganismes et des matériaux riches en protéines et carbohydrates.

Le gain de temps réalisé grâce à la mise en oeuvre du procédé selon l'invention s'accompagne aussi d'un accroissement des rendements, ce qui sera exposé ci-après et apparaîtra clairement dans les exemples.

Le problème de l'amélioration de la rentabilité desdits procédés de fabrication ou de culture, basés sur la dégradation de la biomasse, a déjà été abordé sous différents angles. On a notamment eu recours à des procédés classiques d'apport d'éléments azotés, à des procédés d'ensemencements bactériens.

A l'inverse de ces procédés de l'art antérieur, le procédé selon l'invention ne modifie pas les processus naturels.

Ledit procédé selon l'invention consiste à répartir au sein de ladite biomasse de 75 à 150 g par tonne de matière sèche, d'un mélange de cellulase(s) et d'hémi-cellulase(s).

Ledit procédé consiste donc en l'apport d'un mélange d'hémi-cellulase(s) et de cellulase(s), à faible dose. Le choix des enzymes entrant dans la composition du mélange est dicté par la complémentarité d'action que doivent présenter leurs subfractions, notamment au cours de l'évolution de la biomasse. Cette complémentarité d'action doit s'exercer au cours de la fermentation vis-à-vis des différents paramètres évolutifs caractérisant le milieu.

Parmi ces paramètres, on peut citer: le pH, la température, le taux d'humidité, le temps, etc.

En vue de l'optimisation de cette complémentarité d'action des enzymes constituant le mélange, on utilise un mélange contenant de préférence 2 à 10 % en poids d'hémi-cellulase. De plus, ledit mélange d'enzymes mis en oeuvre contient avantageusement deux cellulases et une hémi-cellulase.

Le procédé selon l'invention fait intervenir une faible quantité dudit mélange d'enzymes.

Selon une des formes préférées de l'invention, ledit mélange d'enzymes est constitué de la Rapidase® $C_{80}$, de la Maxazyme® et de la Sumyzyme® AC.

La Rapidase® C est une hémi-cellulase. Il s'agit d'une préparation purifiée et concentrée d'enzymes pectolytiques, spécifiques de l'hydrolyse des matières pectiques. Elle est commercialisée par la Société Gist-Brocadès NV. L'indice 80 est relatif à son degré de concentration.

La Maxazyme® CL est une cellulase commercialisée par la Société Gist-Brocadès NV, la Sumyzyme® AC est une cellulase commercialisée par la Société Sumitomo Chemical Ltd. On peut également utiliser la cellulase commercialisée sous la dénomination Sumyzyme® $C_{8000}$ par la Société Sumitomo Chemical Ltd.

Des résultats particulièrement intéressants ont été obtenus avec un mélange contenant de 2 à 8 % de Rapidase® $C_{80}$, de 84 à 97 % de Maxazyme® CL et de 1 à 8 % de Sumyzyme® AC, les pourcentages étant exprimés en poids.

Le conditionnement du mélange d'enzymes à utiliser dans le procédé selon l'invention est important. Il doit permettre d'assurer une bonne répartition dudit mélange au sein de la biomasse et dans ce but, il est à optimiser en fonction de la biomasse à traiter.

Il a été surprenant de constater les avantages de la mise en oeuvre du procédé selon l'invention au cours du cycle de la culture du champignon.

La première étape dudit cycle est celle de la fabrication du compost. Le compost est obtenu par fermentation d'un mélange principalement constitué de fumier éventuellement combiné à de la paille. De plus, ce mélange peut contenir éventuellement du plâtre. Un énorme tas de ce mélange est constitué, que l'on laisse fermenter en milieu aérobie. Il est régulièrement retourné, arrosé et additionné d'engrais. Au sein dudit tas, l'activité des bactéries thermophiles entraîne une importante élévation de température, ladite température pouvant atteindre 85°C. Le compost est obtenu à un certain degré d'évolution dudit tas: la matière devient noire, elle contient environ 72 % d'eau "intégrée", sent l'ammoniac... On procède ensuite à sa pasteurisation et à l'élimination de l'ammoniac qu'il renferme.

L'obtention du compost prêt à l'ensemencement demande environ trois à quatre semaines.

Si, conformément au procédé selon l'invention, on répartit initialement sur le tas de paille et de fumier un mélange d'enzymes tel que caractérisé ci-dessus, on observe:

- que le compost est obtenu plus rapidement avec un gain de temps d'environ 1/3,
- que l'on réalise une économie de matière sèche d'environ 25 à 30 %. Cette économie de matière sèche est principalement due au fait que la température au sein du tas ne s'élève guère, lors de la mise en oeuvre du procédé selon l'invention, au-delà de 70 à 75°C. Il n'y a pas ou peu dans ces conditions de température de dégradation

2

chimique de la matière, de combustion. On reste en régime d'hydrolyse.

L'intérêt de la mise en oeuvre dudit procédé est donc évident et peut être souligné par la précision suivante: on estime que la fabrication du compost intervient pour environ 20 % dans le prix de revient du champignon.

On insistera également sur le fait que la mise en oeuvre dudit procédé n'entraîne aucun inconvénient. D'une part, le procédé classique de fabrication n'est en rien modifié, d'autre part, il n'y a aucun impératif d'utilisation supplémentaire pour le compost obtenu. Il est enfin évident que le procédé selon l'invention peut aussi être mis en oeuvre dans tous procédés de compostage, modifiés.

Pour l'obtention des résultats positifs indiqués ci-dessus, une bonne répartition du mélange d'enzymes dans le tas de paille et fumier est nécessaire. Elle est réalisée par un conditionnement spécifique dudit mélange d'enzymes, notamment sous la forme d'une poudre mouillable. Le mélange d'enzymes peut également être disposé sur un support, par exemple un support glucidique, qui en limite le caractère hygroscopique. On indiquera que le support est choisi en fonction des produits que l'on ajoute normalement dans le compost (azote-urée et/ou sulfate d'ammonium).

De plus, on peut également utiliser un agent de solubilisation, tel que par exemple le sorbitol à raison d'environ 1 % par rapport au support azoté.

Les exemples suivants illustrent l'invention sans toutefois en limiter la portée.

## Exemple 1

Le procédé selon l'invention a été mis en oeuvre pour la fabrication de compost, avec un mélange d'enzymes ayant la composition ci-après pour 100 g:

- 4 g de Rapidase $C_{80}$
- 94 g de Maxazyme CL
- 2 g de Sumyzyme AC

Ledit mélange a été conditionné sous forme d'une poudre mouillable.

On a noté que son utilisation permettait l'obtention de composts en 2 semaines, au lieu de au moins 23 jours selon le procédé classique. Lesdits composts sont obtenus plus rapidement mais avec les mêmes caractéristiques physico-chimiques et lors de leur utilisation conduisent aux mêmes rendements de production.

On a réalisé l'essai n° 1 ci-après, en menant l'opération de compostage, "parallèlement" sur deux tas de paille et fumier A et B ayant la composition indiquée dans le tableau I ci-après.

Le tas A a servi de témoin. Sur le tas B, on a réparti le mélange selon l'invention, conditionné sous forme d'une poudre mouillable, à raison de 100 g d'enzymes par tonne de matière sèche.

L'opération de compostage a nécessité 25 jours pour le tas A, 18 jours seulement pour le tas B.

On peut schématiser, comme indiqué ci-dessous, le déroulement dans le temps des opérations de compostage des deux tas A et B.

Au cours desdites opérations, l'évolution de la masse des deux tas A et B a été suivie. Les résultats sont indiqués dans le tableau II ci-après.

On a réalisé des essais analogues, essais n° 2 et 3 en utilisant à chaque fois un tas témoin: tas A et un tas B: tas traité selon l'invention avec le mélange d'enzymes ci-dessus dénommé également "essai". Les compositions de tas A et B pour chaque essai sont consignées dans le tableau I ci-après.

La durée de compostage au cours des essais n° 2 et n° 3 a été de 18 jours pour les tas A et B. Les résultats obtenus sont consignés dans le tableau II ci-après.

A partir du poids avant pasteurisation, on peut déterminer dans chaque cas le gain brut obtenu avec le procédé de l'invention.

En tenant compte de l'humidité du produit obtenu, on peut déterminer le poids réel en matières sèches avant pasteurisation.

On estime que la perte normale en matière sèche du témoin est de 50 % (pourcentage couramment admis dans la littérature) et on détermine alors la perte en matière sèche de l'essai.

$$\text{gain brut essai / témoin} = \frac{\text{gain brut essai} - \text{gain brut témoin}}{\text{gain brut essai}}$$

le gain en matière sèche est égal à:

$$\text{gain brut essai / témoin} \times \frac{\text{matière sèche essai}}{\text{matière sèche témoin}}$$

Les résultats obtenus sont consignés dans le tableau III ci-après.

On constate que les pertes en matières sèches sont moindres avec le procédé selon l'invention. Elles sont de 33 à 38 % environ comparativement à des pertes de 50 % pour les témoins.

L'ensemble des résultats ci-dessus montrent que la mise en oeuvre du procédé de l'invention permet une économie considérable de matière sèche.

On note également que le pourcentage de perte en pasteurisation est fortement diminué. Par exemple, pour l'essai n° 1 ce pourcentage est de 18,8 % pour le tas témoin (A). Il est limité à 10,4 % pour le tas B, sur lequel, conformément à l'invention, on a réparti le mélange d'enzymes.

**Tableau I**

**Formules des composts**

| | Compost habituel Quantité pour obtenir 100 t de compost avant pasteurisation | Essai n° 1 | | Essai n° 2 | | Essai n° 3 | |
|---|---|---|---|---|---|---|---|
| | | A (témoin) | B | A (témoin) | B | A (témoin) | B |
| Fumier de cheval | $230\ m^3$ = 54,5 t | $51\ m^3$ = 11,765 t | $54\ m^3$ = 14,460 t | $22,63\ m^3$ | $23,36\ m^3$ | $30,53\ m^3$ | $30,53\ m^3$ |
| Paille Fumier de volaille | 9 t $18\ m^3$ | | | $8,37\ m^3$ | $8,64\ m^3$ | $12,47\ m^3$ | $12,47\ m^3$ |
| Urée | 130 kg | 25 kg | 25 kg | 16 kg | 16 kg | 20 kg | 20 kg |
| Sulfate d'$NH_3$ | 500 kg | 75 kg | 75 kg | 40 kg | 40 kg | 50 kg | 50 kg |
| Carbonate de Ca | 540 kg | 60 kg | 60 kg | 75 kg | 75 kg | 100 kg | 100 kg |
| Farine de plumes de poulets | 180 kg | 25 kg | 25 kg | 20 kg | 20 kg | 25 kg | 25 kg |
| Plâtre | 540 kg | 176 kg | 240 kg | 86 kg | 114 kg | 112 kg | 154 kg |
| Compost urbain | 15 t | 2,65 t | 3,61 t | 1,71 t | 2,32 t | 1,95 t | 2,68 t |

# EP 0 214 210 B1

**Tableau II**

**Evolution de la masse de matières en cours de compostage**

| Essai | Tas \ Jours | | Poids début compostage | | Poids avant pasteurisation | Poids après pasteurisationen | Perte sur brut pasteurisation |
|---|---|---|---|---|---|---|---|
| | | | $(J = -25)$ | $(J = -18)$ | $(J = -6)$ | $(J = 0)$ | |
| n° 1 | A | | $(51\ m^3)$ 11,765 t | | 19,03 t | 15,45 t | 18,8 % |
| | B | | | $(54\ m^3)$ 14,460 t | 29,02 t | 26,00 t | 10,4 % |
| n° 2 | A | | | $31\ m^3$ | 11,9 t | 9,27 t | 22,1 % |
| | B | | | $32\ m^3$ | 14,7 t | 11,40 t | 22,6 % |
| n° 3 | A | | | $43\ m^3$ | 13,21 t | 10,44 t | 21 % |
| | B | | | $43\ m^3$ | 17,63 t | 11,22 t | 25 % |

**Tableau III**

| | Gain brut Essai / témoin | Humidité | | Perte matière sèche | | Gain matière sèche |
|---|---|---|---|---|---|---|
| | | Témoin | Essai | Témoin | Essai | |
| **Essai 1** Témoin 25 j Essai 18 j | + 24,2 % | 72 % | 72,8 % | 50 % | 38,2 % | + 23,5 % |
| **Essai 2** Témoin 18 j Essai 18 j | + 23,0 % | 72,1 % | 73,5 % | 50 % | 39,1 % | + 21,8 % |
| **Essai 3** Témoin 18 j Essai 18 j | + 33,4 % | 70,4 % | 70,3 % | 50 % | 33,2 % | + 33,5 % |

## Revendications

1. Procédé d'obtention de composts utiles pour la culture des champignons, par fermentation aérobie d'une biomasse à base de matières cellulosiques, caractérisé en ce qu'il comprend la répartition au sein de ladite biomasse de 75 à 150 g par tonne de matière sèche, d'un mélange de cellulase(s) et d'hémi-cellulase(s).

2. Procédé selon la revendication 1, caractérisé en ce que ledit mélange d'enzymes contient de 2 à 10 % en poids d'hémicellulase(s) et de 90 à 98 % en poids de cellulase(s).

3. Procédé selon l'une des revendications 1 ou 2, caractérisé en ce que ledit mélange d'enzymes comprend une hémi-cellulase et deux cellulases.

4. Procédé selon l'une quelconque des revendications 1 à 3, caractérisé en ce que la biomasse est à base d'un mélange de paille et de fumier.

5. Procédé selon la revendication 4, caractérisé en ce que la biomasse contient en outre des sels minéraux et organiques, des adjuvants azotés.

6. Procédé selon l'une quelconque des revendications 1 à 5, caractérisé en ce que le mélange d'enzymes à répartir est conditionné sous forme d'une poudre mouillable ou disposé sur un support.

## Claims

1. A process for obtaining composts useful for the cultivation of mushrooms by aerobic fermentation of a biomass based on cellulosic matters, characterized in that it comprises the distribution within said biomass of 75 to 150 g per ton of dry matter of a cellulase(s) and hemi-cellulase(s) mixture.

2. A process according to Claim 1, characterized in that said mixture of enzymes contains from 2 to 10 % by weight of hemi-cellulase(s) and from 90 to 98 % by weight of cellulase(s).

3. A process according to one of Claims 1 or 2, characterized in that said mixture of enzymes comprises one hemi-cellulase and two cellulases.

4. A process according to any one of Claims 1 to 3, characterized in that the biomass is based on a mixture of straw and manure.

5. A process according to Claim 4, characterized in that the biomass also contains inorganic and organic salts, nitrogenous additives

6. A process according to any one of Claims 1 to 5, characterized in that the mixture of enzymes to be distributed is packaged in the form of a wettable powder or disposed on a support.


**Patentansprüche**

1. Verfahren zur Gewinnung von nutzbaren Komposten für die Pilzzucht, durch aerobe Gärung einer Biomasse auf der Grundlage von Zellulosestoffen, dadurch gekennzeichnet, dass es aus der Verteilung innerhalb der genannten Biomasse von 75 bis 150 g per Tonne Trockenmasse einer Cellulase(n)- und Hemicellulase(n)-Mischung besteht.

2. Verfahren nach Anspruch 1 dadurch gekennzeichnet, dass die genannte Enzym-Mischung 2 bis 10 Gewichtsprozent Hemicellulase(n) und 90 bis 98 Gewichtsprozent Cellulase(n) enthält.

3. Verfahren nach einem der Ansprüche 1 oder 2, dadurch gekennzeichnet, dass die genannte Enzym-Mischung eine Hemicellulase und zwei Cellulasen enthält.

4. Verfahren nach einem der Ansprüche 1 bis 3, dadurch gekennzeichnet, dass der Biomasse eine Stroh- und Dünger-Mischung zugrundeliegt.

5. Verfahren nach Anspruch 4, dadurch gekennzeichnet, dass die Biomasse ausser anorganischen und organischen Salzen, stickstoffhaltige Zusatzmittel enthält.

6. Verfahren nach irgendeinem der Ansprüche 1 bis 5, dadurch gekennzeichnet, dass die zu verteilende Enzym-Mischung in Form eines benetzbaren Pulvers aufgemacht oder auf einem Träger aufgebracht ist.